# EUROPEAN PATENT SPECIFICATION

(11) **EP 3 211 814 B1**
(45) Date of publication and mention of the grant of the patent: **28.08.2019**
(21) Application number: 17157901.4
(22) Date of filing: 24.02.2017
(51) Int. Cl.: H04L 1/18, H04L 1/00

(54) **DEVICE AND METHOD OF HANDLING COMMUNICATION WITH ANOTHER DEVICE**
KOMMUNIKATIONSVORRICHTUNG UND VERFAHREN ZUR HANDHABUNG MIT EINEM ANDEREN GERÄT
DISPOSITIF ET MÉTHODE DE TRAITMENT DE COMMUNICATION AVEC UN AUTRE DISPOSITIF

(30) Priority: 26.02.2016 US 201662300095 P
(43) Date of publication of application: 30.08.2017
(73) Proprietor: HTC Corporation, Taoyuan City 330 (TW)
(72) Inventor: Wu, Chih-Hsiang, Taoyuan City 330 (TW); Meng, Ling-San, Taoyuan City 330 (TW)
(74) Representative: Murgitroyd & Company

(56) References cited:
- WO-A1-2015/127424
- US-A1- 2016 043 833

## Description

### Background of the Invention

### 1. Field of the Invention

The present invention relates to a communication device and a method used in a wireless communication system, and more particularly, to a communication device and method of handling communication with another communication device.

### 2. Description of the Prior Art

In a long-term evolution (LTE) system, an eNB schedules data transmission to or from a user equipment (UE) by a physical downlink control channel (PDCCH). The UE has to check whether it is scheduled by the PDCCH firstly and then transmits or receives data if scheduled. This introduces latency in data transmission or reception. WO 2015/127424 A1 and US 2016/043833 A1 may be regarded as background art useful for understanding this disclosure.

Thus, how to handle communication with the network is an important problem to be solved.

### Summary of the Invention

It is an object of the present invention to provide a first communication device of handling communication with a second communication. This object can be achieved by the features as defined by the independent claims. Further enhancements are characterised by the dependent claims. Throughout the description any references to embodiments which do not fall within the scope of the claims are to be regarded as related examples useful for understanding the invention.

According to one embodiment, a first communication device of handling communication with a second communication device comprises a storage unit for storing instructions and a processing circuit coupled to the storage unit. The processing circuit is configured to execute the instructions stored in the storage unit. The instructions comprise transmitting or receiving a radio resource control (RRC) message or a random access response (RAR) to the second communication device, wherein the RRC message configures a first identifier, or the RAR configures the first identifier, to be a cell radio network temporary identifier (C-RNTI); generating a transport block (TB); generating a first cyclic redundancy check (CRC) according to the TB; scrambling the first CRC with the first identifier to generate a first scrambled CRC, wherein the first identifier is known by the first communication device and second communication device; and performing a transmission of the TB and the first scrambled CRC on at least one first subcarrier in at least one first consecutive orthogonal frequency division multiplexing (OFDM) symbol, to the second communication device.

According to one embodiment, a first communication device of handling communication with a second communication device comprises a storage unit for storing instructions and a processing circuit coupled to the storage unit. The processing circuit is configured to execute the instructions stored in the storage unit. The instructions comprise transmitting or receiving a radio resource control (RRC) message or a random access response (RAR) to the second communication device, wherein the RRC message configures a first identifier, or the RAR configures the first identifier, to be a cell radio network temporary identifier (C-RNTI); generating a transport block (TB); generating a first control block (CB) comprising at least one of a modulation scheme, a coding scheme, a redundancy version, a hybrid automatic repeat request (HARQ) process identifier and a new data indicator (NDI) for the second communication device to process the TB; generating a first cyclic redundancy check (CRC) according to the first CB; scrambling the first CRC with the first identifier to generate a first scrambled CRC, wherein the first identifier is known by the first communication device and second communication device; and performing a transmission of the TB, the first CB and the first scrambled CRC on at least one first subcarrier in at least one first resource block (RB), to the second communication device.

According to one embodiment, a first communication device of handling a transmission, comprises a storage unit for storing instructions and a processing circuit coupled to the storage unit. The processing circuit is configured to execute the instructions stored in the storage unit. The instructions comprise determining a resource block (RB) according to a length of a transmission time interval (TTI); and transmitting a transmission on one or more the RBs to a second communication device.

According to one embodiment, a method for handling communication between a first communication device and a second communication devices, comprising: transmitting or receiving, by the first communication device, a radio resource control, RRC, message or a random access response, RAR, to the second communication device, wherein the RRC message configures a first identifier, or the RAR configures the first identifier, to be a cell radio network temporary identifier, C-RNTI; generating, by the first communication device, a transport block, TB; generating, by the first communication device, a first cyclic redundancy check, CRC, according to the TB; scrambling, by the first communication device, the first CRC with the first identifier to generate, by the first communication device, a first scrambled CRC, wherein the first identifier is known by the first communication device and second communication device; and performing, by the first communication device, a transmission of the TB and the first scrambled CRC on at least one first subcarrier in at least one first consecutive orthogonal frequency division multiplexing, OFDM, symbol, to the second communication device..

### Brief Description of the Drawings

The accompanying drawings illustrate presently exemplary embodiments of the disclosure and serve to explain, by way of example, the principles of the disclosure.
Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a flowchart of a process according to an example of the present invention.
Fig. 6 is a flowchart of a process according to an example of the present invention.
Fig. 7 is a flowchart of a process according to an example of the present invention.
Fig. 8 is a flowchart of a process according to an example of the present invention.
Fig. 9 is a flowchart of a process according to an example of the present invention.
Fig. 10 is a schematic diagram of determination of a RB according to an example of the present invention.

### Detailed Description

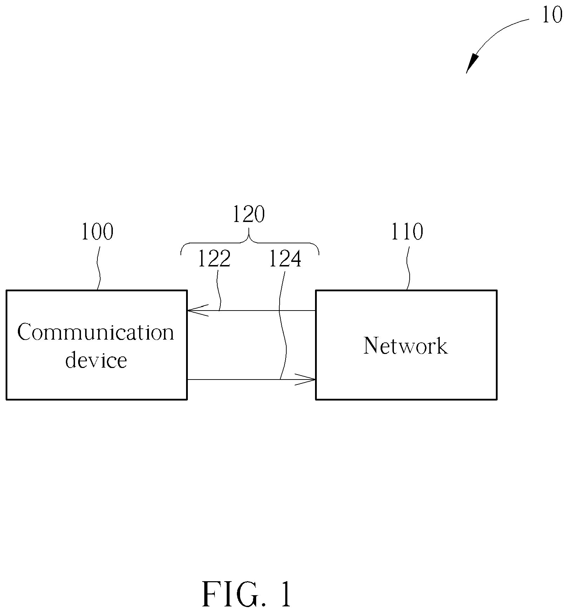

Fig. 1 is a schematic diagram of a wireless communication system 10 according to an example of the present invention. The communication system 10 is briefly composed of a communication device 100 and a network 110. The network 110 and the communication device 100 may communicate with each other via a communication channel 120 including at least one downlink (DL) channel 122 and/or at least one uplink (UL) channel 124. In Fig. 1, the communication device 100 and the network 110 are simply utilized for illustrating the structure of the communication system 10. Practically, the network 110 may be an evolved UTRAN (E-UTRAN) including at least one evolved NB (eNB) in a long term evolution (LTE) system, an evolution of the LTE system, or a fifth generation (5G) system employing orthogonal frequency-division multiplexing (OFDM) and/or non-OFDM for communicating with the communication device 100. The 5G system enables communication in a wider system bandwidth (e.g., 100 MHz) and a short transmission time interval (TTI) shorter than 1ms.

The communication device 100 may aggregate multiple component carriers (CCs) in a time division duplex (TDD) mode and/or a frequency division duplex (FDD) mode for communicating with the network 110 in the same frequency band or different frequency bands when supporting carrier aggregation (CA) or dual connectivity (DC). A cell may be configured with a UL CC and a DL CC. If the cell is a FDD cell, the UL and DL CCs have different physical frequencies (e.g., carrier frequencies). If the cell is a TDD cell, the UL and DL CCs are the same CC.

The communication device 100 may be a user equipment (UE), a mobile phone, a laptop, a tablet computer, an electronic book, a portable computer system, a vehicle or an airplane. For UL, the communication device 100 is a transmitter and the network 110 is a receiver, and for DL, the network 110 is the transmitter and the communication device 100 is the receiver.

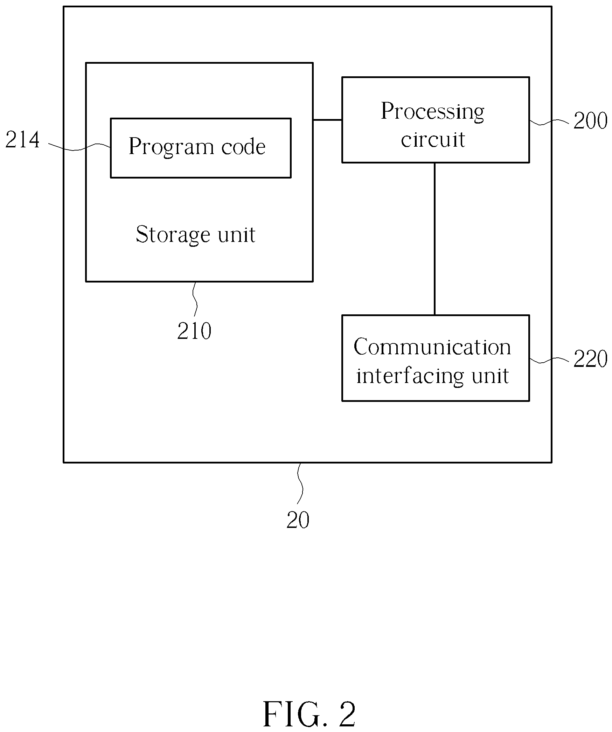

Fig. 2 is a schematic diagram of a communication device 20 according to an example of the present invention. The communication device 20 may be the communication device 100 or the network 110 shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that stores a program code 214, accessed and executed by the processing circuit 200. Examples of the storage unit 210 include but are not limited to a read-only memory (ROM), flash memory, random-access memory (RAM), hard disk, optical data storage device, non-volatile storage unit, non-transitory computer-readable medium (e.g., tangible media), etc. The communication interfacing unit 220 is preferably a transceiver used to transmit and receive signals (e.g., data, signals, messages and/or packets) according to processing results of the processing circuit 200.

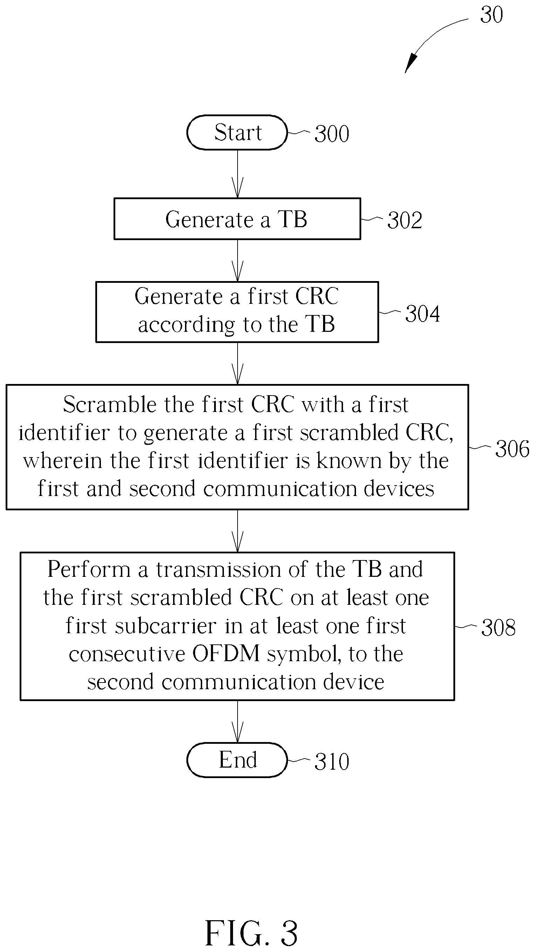

Fig. 3 is a flowchart of a process 30 according to an example of the present invention. The process 30 may be utilized in a first communication device (e.g., the network 110 or the communication device 100 in Fig. 1), to communicate with a second communication device (e.g., the communication device 100 or the network 110 in Fig. 1). The process 30 includes the following steps:
Step 300: Start.
Step 302: Generate a transport block (TB).
Step 304: Generate a first cyclic redundancy check (CRC) according to the TB.
Step 306: Scramble the first CRC with a first identifier to generate a first scrambled CRC, wherein the first identifier is known by the first and second communication devices.
Step 308: Perform a transmission of the TB and the first scrambled CRC on at least one first subcarrier in at least one first consecutive OFDM symbol, to the second communication device.
Step 310: End.

According to the process 30, the first communication device generates a TB (which may include at least one medium access control (MAC) protocol data unit (PDU)) and a first CRC according to (e.g., from) the TB. The first communication device scrambles the first CRC with (e.g., by using) a first identifier to generate a first scrambled CRC. The first communication device performs a transmission of the TB and the first scrambled CRC on at least one first subcarrier in at least one first consecutive OFDM symbol, to the second communication device. That is, the first communication device uses the first scrambled CRC to address the second communication device.

There are several examples for the second communication device to determine whether the TB is addressed to itself. In one example, the second communication device descrambles the first scrambled CRC with (e.g., by using) the first identifier, to determine (e.g., identify) whether the TB belongs to the second communication device. After descrambling the first scrambled CRC, the second communication device obtains the first CRC. The second communication device derives (e.g., calculate) a second CRC according to (e.g., from) the TB, and compares the first CRC with the second CRC. In one example, the second communication device determines that the TB is for itself, if the first CRC and the second CRC are the same. In one example, the second communication device discards (or ignores) the TB, if they are different. In another example, the second communication device derives (e.g., calculates) a third CRC according to (e.g., from) the TB and scrambles the third CRC with (e.g., by using) the first identifier to generate a third scrambled CRC. The second communication device compares the first and third scrambled CRCs. In one example, the second communication device determines that the TB is for itself, if the first and third scrambled CRCs are the same. In one example, the second communication device discards the TB, if they are different.

In one example, the first communication device performs a retransmission of the TB with a second scrambled CRC on at least one second subcarrier in at least one second consecutive OFDM symbol, to the second communication device, if the first communication device does not receive a hybrid automatic repeat request (HARQ) acknowledgement (ACK) (which positively acknowledges the transmission of the TB) of the transmission of the TB or receives a HARQ negative ACK (NACK) of the transmission of the TB on at least one third subcarrier in at least one third consecutive OFDM symbol, from the second communication device. In one example, the transmission and retransmission of the TB are the same, if the first communication device uses a chase combining scheme for HARQ transmission or an ARQ transmission. In one example, the transmission and retransmission of the TB are different, if the first communication device uses an incremental redundancy scheme for HARQ transmission (e.g., different redundancy versions). In one example, the second communication device transmits the HARQ ACK on at least one subcarrier in at least one consecutive OFDM symbol to the first communication device, if the second communication device successfully receives and decodes the transmission or retransmission of the TB. In one example, the first and second scrambled CRCs are the same, if the transmission of the TB and the retransmission of the TB are the same. Otherwise, the first and second scrambled CRCs are different (e.g., different redundancy versions). In one example, the number of the at least one first consecutive OFDM symbol, the number of the at least one second consecutive OFDM symbol and the number of the at least one third consecutive OFDM symbol are the same or different. In one example, the number of the at least one first consecutive OFDM symbol, the number of the at least one second consecutive OFDM symbol and the number of the at least one consecutive third OFDM symbol are less than 7 OFDM symbols. In one example, the second communication device stores the transmission of the TB and the retransmission of the TB for soft combining (e.g., chase combining or incremental redundancy), if a HARQ scheme is adopted. In one example, the soft combining is performed according to a blind detection scheme, but not limited herein.

Realization of the process 30 is not limited to the above description. The following examples may be applied for realizing the process 30.

In one example, the first communication device is a network, and the second communication device is a first UE. The network configures the first identifier to the first UE. A second UE configured with a second identifier by the network receives the TB and the first scrambled CRC. The second UE descrambles the first scrambled CRC with (e.g., by using) the second identifier to obtain a CRC which is not the first CRC generated from the TB. In one example, the second UE scrambles the first CRC generated from the TB with (e.g., by using) the second identifier to generate a scrambled CRC, and the scrambled CRC is not the same as the first scrambled CRC. Thus, the second UE knows that the TB is not for the second UE, and discards the TB.

In one example, the first communication device is a first UE, and the second communication device is a network. The network configures the first identifier to the first UE, and configures a second identifier to a second UE. The first UE generates a TB, and generates a first CRC from the TB. The first UE scrambles the first CRC with (e.g., by using) the first identifier to generate a first scrambled CRC. The first UE transmits the TB and the first scrambled CRC on the at least one first subcarrier in the at least one first consecutive OFDM symbol, to the network. The network receives the TB and the first scrambled CRC on the at least one first subcarrier in the at least one first consecutive OFDM symbol. The network determines (e.g., identifies) whether the TB is from the first UE by using the first identifier and the first scrambled CRC and whether the TB is from the second UE by using the second identifier and the first scrambled CRC, as described above. In one example, the network tries to use the first identifier to determine whether the TB is from the first UE when determining the TB is not from the second UE.

In one example, before performing the transmission (i.e., the process 30), the first communication device and the second communication device communicate with each other using 1ms TTI, i.e., a subframe. In detail, the first communication device transmits a configuration configuring or indicating the number of the at least one first consecutive OFDM symbol, i.e., a TTI or a transmission unit, to the second communication device in (e.g., by using) a radio resource control (RRC) message, a MAC PDU or a physical layer signaling (e.g., physical DL control channel (PDCCH)). The number of the at least one first consecutive OFDM symbol is less than 7 OFDM symbols. Then, the first communication device starts the process 30. In one example, the second communication device starts the process 30, when the second communication device receives the RRC message, the MAC PDU or the physical layer signaling. In one example, the first communication device starts the process 30, when the first communication device receives a response responding the RRC message, the MAC PDU or the physical layer signaling from the second communication device.

In one example, the second communication device and the first communication device simultaneously perform legacy LTE transmission and/or reception and the process 30. In one example, the first communication device transmits a second TB including an internet protocol (IP) packet on the at least one first consecutive OFDM symbol while transmitting a first TB including multimedia broadcast multicast services (MBMS) data, system information or paging in 1ms TTI, i.e., legacy LTE transmission, to the second communication device. In one example, the second communication device receives the second TB while receiving the first TB, i.e., legacy LTE reception.

The process 30 is described in terms of a transmitter. It should be apparent to those skilled in the art to derive embodiments of a receiver according to the process 30 as follows.

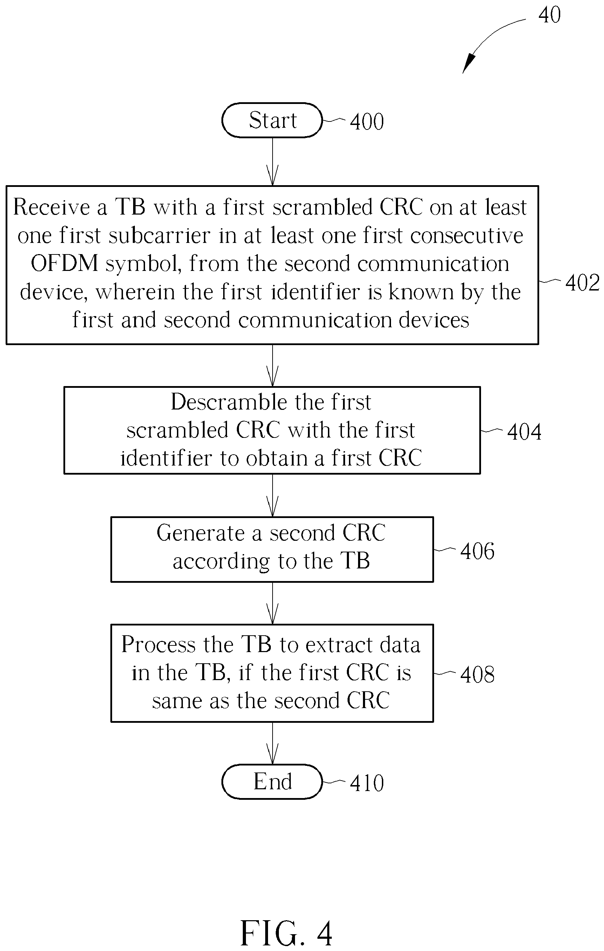

Fig. 4 is a flowchart of a process 40 according to an example of the present invention. The process 40 may be utilized in a first communication device (e.g., the network 110 or the communication device 100 in Fig.1), to communicate with a second communication device (e.g., the communication device 100 or the network 110 in Fig. 1). The process 40 includes the following steps:
Step 400: Start.
Step 402: Receive a TB with a first scrambled CRC on at least one first subcarrier in at least one first consecutive OFDM symbol, from the second communication device, wherein the first identifier is known by the first and second communication devices.
Step 404: Descramble the first scrambled CRC with the first identifier to obtain a first CRC.
Step 406: Generate a second CRC according to the TB.
Step 408: Process the TB to extract data in the TB, if the first CRC is same as the second CRC.
Step 410: End.

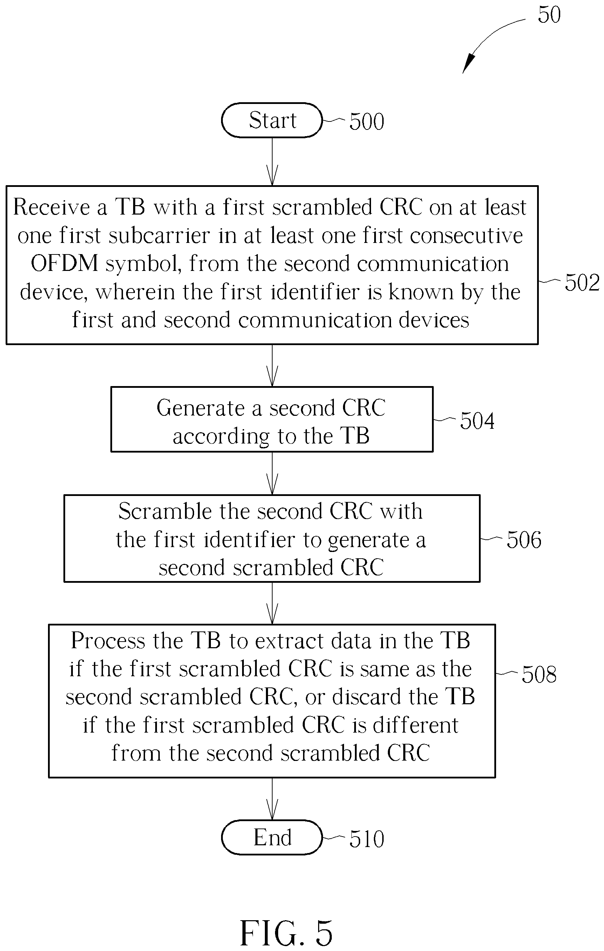

Fig. 5 is a flowchart of a process 50 according to an example of the present invention. The process 50 may be utilized in a first communication device (e.g., the network 110 or the communication device 100 in Fig. 1), to communicate with a second communication device (e.g., the communication device 100 or the network 110 in Fig. 1). The process 50 includes the following steps:
Step 500: Start.
Step 502: Receive a TB with a first scrambled CRC on at least one first subcarrier in at least one first consecutive OFDM symbol, from the second communication device, wherein the first identifier is known by the first and second communication devices.
Step 504: Generate a second CRC according to the TB.
Step 506: Scramble the second CRC with the first identifier to generate a second scrambled CRC.
Step 508: Process the TB to extract data in the TB if the first scrambled CRC is same as the second scrambled CRC, or discard the TB if the first scrambled CRC is different from the second scrambled CRC.
Step 510: End.

In one example, the first communication device receives capability information indicating that the second communication device supports latency reduction (or called data transmission without the PDCCH as described in the process 30, 40 and/or 50), from the second communication device. Then, the first communication device transmits a RRC message (e.g., RRCConnectionReconfiguration) configuring the latency reduction to the second communication device. The second communication device performs the process 30, when the second communication device receives the RRC message. In one example, the RRC message includes the first identifier, and the first identifier is a new radio network temporary identifier (RNTI) which is different from a cell RNTI (C-RNTI) or is a C-RNTI. In another example, the RRC message does not include the first identifier, and the first identifier is a C-RNTI. The C-RNTI is configured by the first communication device in a random access response of a random access procedure, when the second communication device performs the random access procedure. In one example, the second communication device uses the C-RNTI for decoding the PDCCH.

There are several examples for encoding the TB and the first scrambled CRC according to the process 30. In one example, an operation of modulation, coding (e.g., turbo or tail-biting convolutional coding), rate matching and/or scrambling are performed for a combination of the TB and the first scrambled CRC. That is, the TB and the first scrambled CRC are jointly encoded. In one example, a first operation of modulation, coding, rate matching and/or scrambling is performed for the first scrambled CRC while a second operation of modulation, coding, rate matching and/or scrambling is performed for the TB. That is, the TB and the first scrambled CRC are separately encoded.

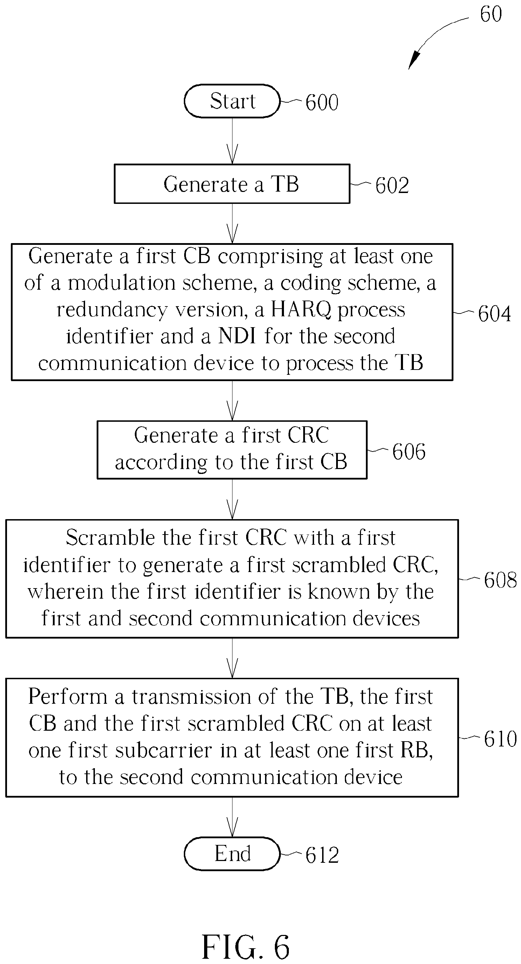

Fig. 6 is a flowchart of a process 60 according to an example of the present invention. The process 60 may be utilized in a first communication device (e.g., the network 110 or the communication device 100 in Fig.1), to communicate with a second communication device (e.g., the communication device 100 or the network 110 in Fig. 1). The process 60 includes the following steps:
Step 600: Start.
Step 602: Generate a TB.
Step 604: Generate a first control block (CB) comprising at least one of a modulation scheme, a coding scheme, a redundancy version, a HARQ process identifier and a new data indicator (NDI) for the second communication device to process the TB.
Step 606: Generate a first CRC according to the first CB.
Step 608: Scramble the first CRC with a first identifier to generate a first scrambled CRC, wherein the first identifier is known by the first and second communication devices.
Step 610: Perform a transmission of the TB, the first CB and the first scrambled CRC on at least one first subcarrier in at least one first resource block (RB), to the second communication device.
Step 612: End.

According to the process 60, the first communication device generates a TB (which may include at least one MAC PDU), a first CB and a first CRC according to (e.g., from) the first CB. The first communication device scrambles the first CRC with (e.g., by using) a first identifier to generate a first scrambled CRC. The first communication device performs a transmission of the TB, the first CB and the first scrambled CRC on at least one first subcarrier in at least one first RB, to the second communication device. That is, the at least one first RB is a transmission unit. The first communication device uses the first scrambled CRC to address the second communication device. The second communication device identifies resource location of the first scrambled CRC in the at least one first RB and determines whether the first CB belongs to the second communication device, when the second communication device receives the at least one first RB. The second communication device may also need to identifies resource location of the first CB in the at least one first RB.

There are several examples for the second communication device to determine whether the first CB is addressed to itself. In one example, the second communication device descrambles the first CRC scrambled with (e.g., by using) the first identifier, to determine (e.g., identify) whether the first CB belongs to the second communication device. After descrambling the first scrambled CRC, the second communication device obtains the first CRC. The second communication device derives (e.g., calculate) a second CRC according to (e.g., from) the first CB, and compares the first CRC with the second CRC. In one example, the second communication device determines that the first CB is for itself, if the first CRC and the second CRC are the same. In one example, the second communication device discards the first CB, if they are different. In another example, the second communication device derives (e.g., calculates) a third CRC according to (e.g., from) the first CB and scrambles the third CRC with (e.g., by using) the first identifier to generate a third scrambled CRC. The second communication device compares the first and third scrambled CRCs. In one example, the second communication device determines that the first CB is for itself, if the first and third scrambled CRCs are the same. Then, the second communication device demodulates and/or decodes the "transmission of the TB" (i.e., modulated and encoded TB) according to the first CB to obtain the TB. In one example, the second communication device discards all of the at least first RB, if they are different.

In one example, the first communication device performs a retransmission of the TB with a second CB and a second scrambled CRC on at least one second subcarrier in at least one second RB, to the second communication device, if the first communication device does not receive a HARQ ACK of the transmission of the TB or receives a HARQ NACK of the transmission of the TB on at least one third subcarrier in at least one third RB, from the second communication device. The first and second CBs are the same or different. In one example, the transmission and retransmission of the TB are the same, if the first communication device uses a chase combining for HARQ transmission or an ARQ transmission. In one example, the transmission and retransmission of the TB are different, if the first communication device uses an incremental redundancy for HARQ transmission (i.e., different redundancy versions). In one example, the second communication device transmits the HARQ ACK on at least one third RB to the first communication device, if the second communication device successfully receives and decodes the transmission or retransmission of the TB. In one example, the first and second scrambled CRCs are the same, if the first and second CBs are the same. Otherwise, the first and second scrambled CRCs are different (e.g., different redundancy versions). In one example, the number of the at least one first RB, the number of the at least one second RB and the number of the at least one third RB are the same or different. In one example, the number of at least one consecutive OFDM symbol of the at least one first RB, the number of at least one consecutive OFDM symbol of the at least one second RB and the number of at least one consecutive OFDM symbol of the at least one third RB are the same or different.

Realization of the process 60 is not limited to the above description. The following examples may be applied for realizing the process 60.

In one example, the first communication device is a network, and the second communication device is a first UE. The network configures the first identifier to the first UE. A second UE configured with a second identifier by the network receives the at least one first RB and identifies the first scrambled CRC from the at least one first RB. The second UE descrambles the first scrambled CRC with (e.g., by using) the second identifier to obtain a CRC which is not the first CRC generated from the first CB. In one example, the second UE scrambles the first CRC generated from the first CB with (e.g., by using) the second identifier to generate a third scrambled CRC. Since the third scrambled CRC is not the same as the first scrambled CRC, the second UE knows that the first CB is not for the second UE, and discards all of the at least one first RB.

In one example, the first communication device is a first UE, and the second communication device is a network. The network configures the first identifier to the first UE and a second identifier to a second UE. The first UE generates a TB and a first CB, and generates a first CRC from the first CB. The first UE scrambles the first CRC with (e.g., by using) the first identifier to generate a first scrambled CRC. The first UE transmits the TB, the first CB and the first scrambled CRC in at least one first RB, to the network. The network receives the at least one first RB and identifies (e.g., searches or locates) the first scrambled CRC from the at least one first RB. The network determines (e.g., identifies) whether the first CB is from the first UE by using the first identifier as described above. The network decodes the first CB, and decodes the TB according to the first CB. In one example, the network first determines whether the first CB is from the second UE by using the second identifier. Since the network determines that the first CB is not from the second UE according to the first scrambled CRC, the network tries to use the first identifier to determine whether the first CB is from the first UE.

In one example, before performing the transmission (i.e., the process 60), the first communication device and the second communication device communicates with each other using 1ms TTI, i.e., a subframe. In detail, the first communication device transmits a configuration configuring or indicating the number of the at least one first consecutive OFDM symbol for the at least one first RB in (e.g., by using) a RRC message, a MAC PDU or a physical layer signaling (e.g., PDCCH), to the second communication device. The number of the at least one first consecutive OFDM symbols is less than 7 OFDM symbols. Then, the first communication device starts the process 60. In one example, the second communication device starts the process 60, when the second communication device receives the RRC message, the MAC PDU or the physical layer signaling. In one example, the first communication device starts the process 60, when the first communication device receives a response responding the RRC message, the MAC PDU or the physical layer signaling from the second communication device.

In one example, the second communication device and the first communication device simultaneously perform legacy LTE transmission and/or reception and the process 60. In one example, the first communication device transmits a second TB including an IP packet on the at least one first RB while transmitting a first TB including MBMS data, system information or paging in 1ms TTI, i.e., legacy LTE transmission, to the second communication device. In one example, the second communication device receives the second TB while receiving the first TB, i.e., legacy LTE reception.

The process 60 is described in terms of a transmitter. It should be apparent to those skilled in the art to derive embodiments of a receiver according to the process 60 as follows.

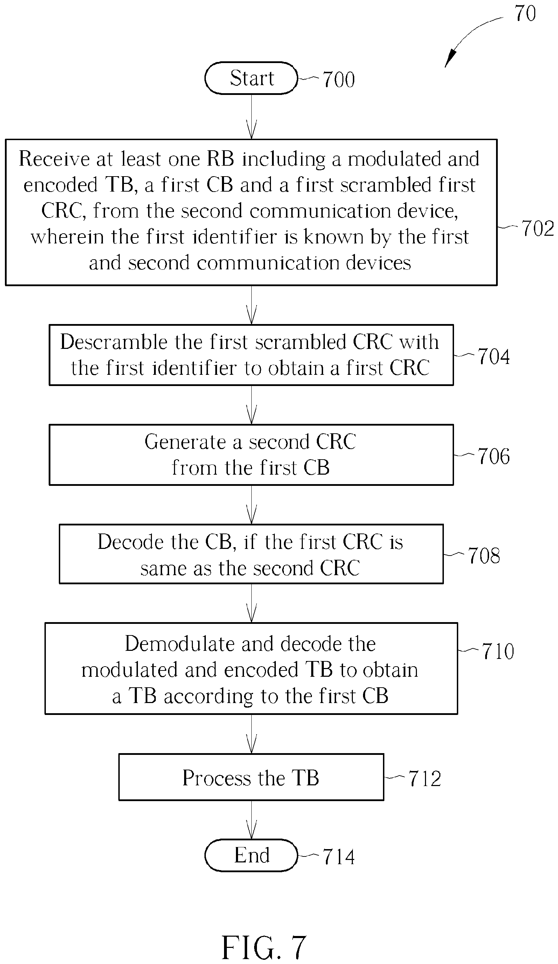

Fig. 7 is a flowchart of a process 70 according to an example of the present invention. The process 70 may be utilized in a first communication device (e.g., the network 110 or the communication device 100 in Fig. 1), to communicate with a second communication device (e.g., the communication device 100 or the network 110 in Fig. 1). The process 70 includes the following steps:
Step 700: Start.
Step 702: Receive at least one RB including a modulated and encoded TB, a first CB and a first scrambled first CRC, from the second communication device, wherein the first identifier is known by the first and second communication devices.
Step 704: Descramble the first scrambled CRC with the first identifier to obtain a first CRC.
Step 706: Generate a second CRC from the first CB.
Step 708: Decode the CB, if the first CRC is same as the second CRC.
Step 710: Demodulate and decode the modulated and encoded TB to obtain a TB according to the first CB.
Step 712: Process the TB.
Step 714: End.

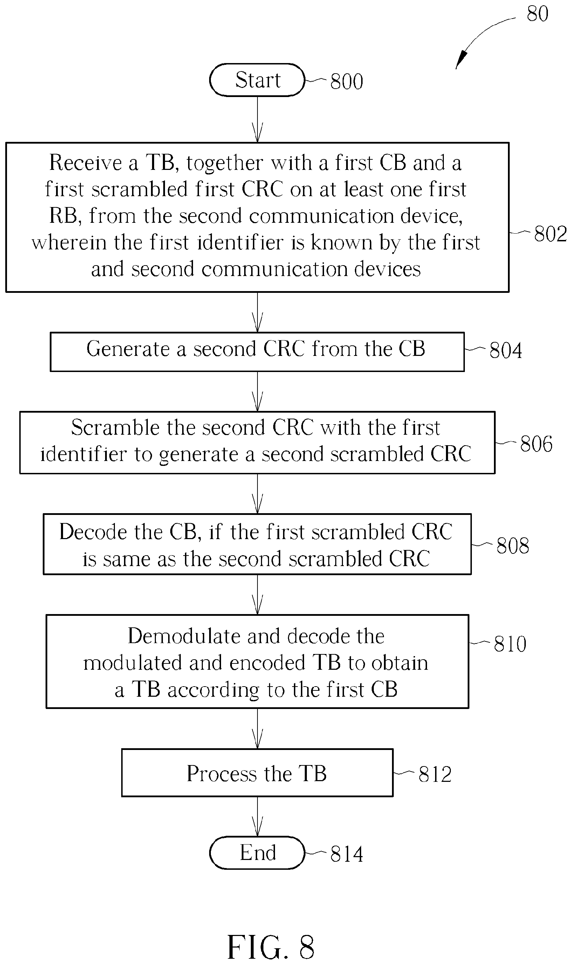

Fig. 8 is a flowchart of a process 80 according to an example of the present invention. The process 80 may be utilized in a first communication device (e.g., the network 110 or the communication device 100), to communicate with a second communication device (e.g., the communication device 100 or the network 110). The process 80 includes the following steps:
Step 800: Start.
Step 802: Receive a TB, together with a first CB and a first scrambled first CRC on at least one first RB, from the second communication device, wherein the first identifier is known by the first and second communication devices.
Step 804: Generate a second CRC from the CB.
Step 806: Scramble the second CRC with the first identifier to generate a second scrambled CRC.
Step 808: Decode the CB, if the first scrambled CRC is same as the second scrambled CRC.
Step 810: Demodulate and decode the modulated and encoded TB to obtain a TB according to the first CB.
Step 812: Process the TB.
Step 814: End.

In one example, the first communication device receives capability information indicating that the second communication device supports latency reduction (or called data transmission without the PDCCH as described in the process 60, 70 and/or 80), from the second communication device. Then, the first communication device transmits a RRC message (e.g., RRCConnectionReconfiguration) configuring the latency reduction to the second communication device. The second communication device performs the process 60, when the second communication device receives the RRC message. In one example, the RRC message includes the first identifier, and the first identifier is a new RNTI which is different from a C-RNTI or is a C-RNTI. In another example, the RRC message does not include the first identifier, and the first identifier is a C-RNTI. In one example, the C-RNTI is configured by the first communication device in a random access response of a random access procedure, when the second communication device performs the random access procedure. In one example, the second communication device uses the C-RNTI for decoding the PDCCH.

There are several examples for encoding the TB, the first CB and the first scrambled CRC in the process 60. In one example, an operation of modulation, coding (e.g., turbo or tail-biting convolutional coding), rate matching and/or scrambling are performed for a combination of the TB, the first CB and the first scrambled CRC. That is, the TB, the first CB and the first scrambled CRC are jointly encoded. In one example, a first operation of modulation, coding, rate matching and/or scrambling is performed for a combination of the first CB and the first scrambled CRC while a second operation of modulation, coding, rate matching and/or scrambling is performed for the TB. That is, the TB, the first CB and the first scrambled CRC are separately encoded.

The following examples are used for illustrating the joint encoding of the TB, the first CB and the first scrambled CRC in the process 60. In one example, a sequence of parity bits for error detection is calculated according (e.g., implemented by using) to at least one of the TB, the first CB and the first scrambled CRC. In another example, the sequence of parity bits is calculated according to (e.g., implemented by using) the first CRC, but is not limited herein. Then, the sequence of parity bits is jointly encoded with the TB, the first CB, and the first scrambled CRC.

The following examples are used for illustrating the separate encoding of the TB, the first CB and the first scrambled CRC in the process 60. The TB is separately encoded from the first CB and the first scrambled CRC. In one example, a sequence of parity bits for error detection is calculated according to (e.g., implemented by using) the TB, and the sequence of parity bits is appended to the TB for the separate encoding. In another example, the sequence of parity bits is calculated according to (e.g., implemented by using) the first CRC, but not limited herein.

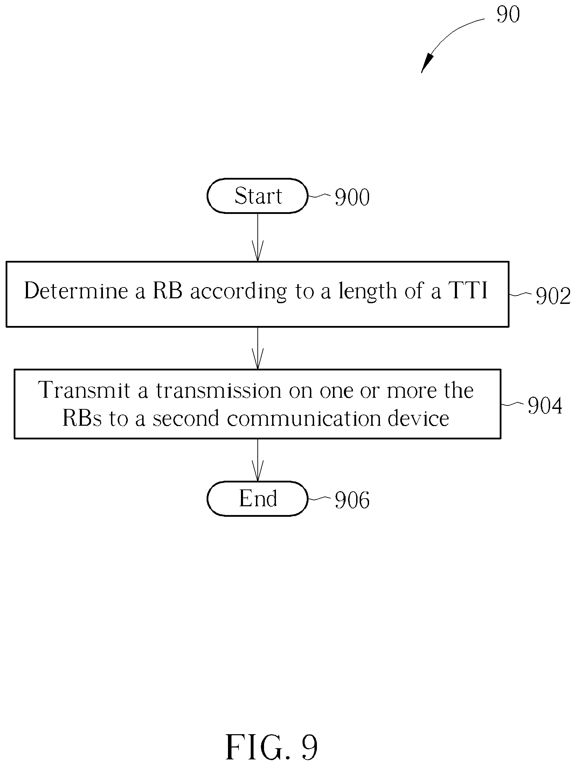

Fig. 9 is a flowchart of a process 90 according to an example of the present invention. The process 90 may be utilized in a first communication device (e.g., the network 110 or the communication device 100), to handle a transmission. The process 90 includes the following steps:
Step 900: Start.
Step 902: Determine a RB according to a length of a TTI.
Step 904: Transmit a transmission on one or more the RBs to a second communication device.
Step 906: End.

According to the process 90, the first communication device determines a RB (e.g., determines a bandwidth of the RB) according to a length of a TTI (e.g., the number of consecutive OFDM symbols). The first communication device transmits a transmission on one or more the RBs to a second communication device (e.g., the communication device 100 or the network 110).

Similarly, the second communication device determines the RB (e.g., determines a bandwidth of the RB) according to the length of the TTI. The second communication device receives the transmission on the one or more the RBs from the first communication device.

In one example, the RB consists of a plurality of subcarriers. The bandwidth of the RB comprises the number of the plurality of subcarriers. The TTI comprises at least one consecutive OFDM symbol. The length of the TTI comprises the number of the at least one consecutive OFDM symbol.

The RB is the smallest unit of resources that can be allocated for data transmission. In one example, the first communication device is the UE and the second communication device is the network (e.g., a base station). In another example, the first communication device is the network and the second communication device is the UE.

In one example, the first communication device determines a first bandwidth of a first RB according to a length of a first TTI and transmits a first transmission on one or more the first RBs in the first TTI to the second communication. The first communication device determines a second bandwidth of a second RB according to a length of a second TTI and transmits a second transmission on one or more the second RBs in the second TTI to the second communication. In one example, the second bandwidth may be larger than the first bandwidth. The length of the first TTI is larger than the length of the second TTI.

In one example, the second communication device receives a configuration configuring a TTI from the first communication device. Then, the second communication device determines the number of a plurality of subcarriers (e.g., 12, 24, 36, 48 or 72) (i.e., a bandwidth of the RB) according to the TTI, and determines a RB according to the TTI and the number of the plurality of subcarriers. The second communication device performs the transmission on one or more the RBs. That is, the number of the plurality of subcarriers is used for determining (e.g., generating) a bandwidth of the RB.

In one example, the number of the plurality of the subcarriers (e.g., 12, 24, 36, 48 or 72) is the same for the entire channel bandwidth (i.e., 1.4, 3, 5, 10, 15 and 20 MHz) defined in the 3rd Generation Partnership Project (3GPP) standard. For example, 24 subcarriers are used for the channel bandwidth of 1.4, 3, 5, 10, 15 and/or 20 MHz.

In one example, the number of the plurality of subcarriers (e.g., 12, 24, 36, 48 or 72) is different for the entire or part of channel bandwidth. For example, 24 subcarriers are used for the channel bandwidth of 1.4 MHz, 36 subcarriers are used for the channel bandwidth 3 MHz, and 60 subcarriers are used for the channel bandwidth of 5, 10, 15 and 20 MHz.

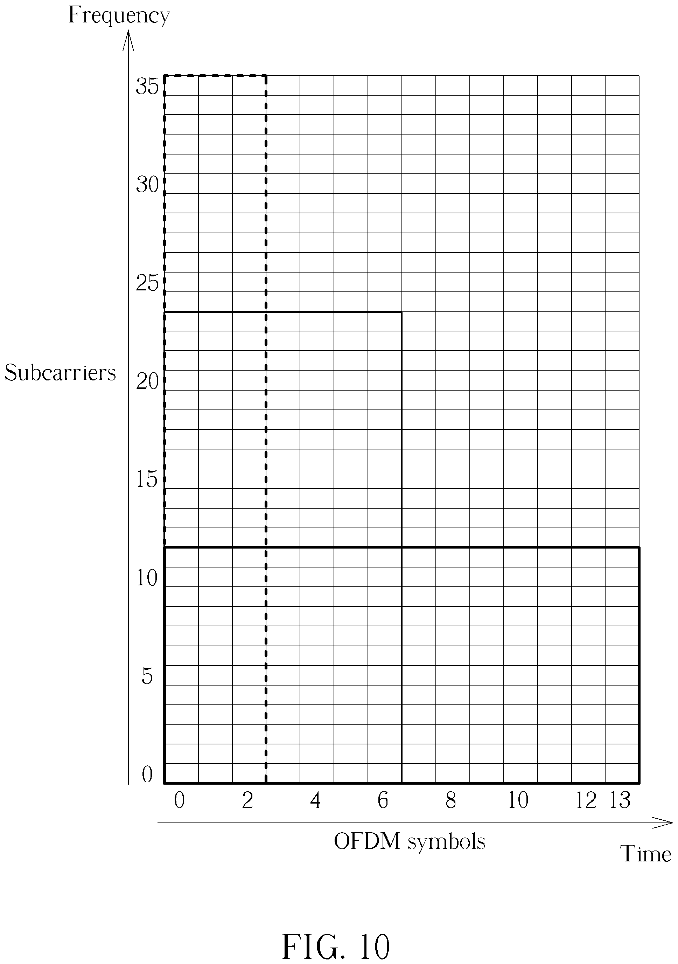

Fig. 10 is a schematic diagram of determination of the RB according to an example of the present invention. In Fig. 10, X-axis represents 14 OFDM symbols (i.e., 1 TTI) for a time dimension, and Y-axis represents 36 subcarriers for a frequency dimension. In one example, the second communication device determines 12 subcarriers according to configured 14 OFDM symbols (i.e., 1 TTI), and determines a RB (represented as a block with a thick solid line) according to the configured 14 OFDM symbols and 12 subcarriers. In one example, the second communication device determines 24 subcarriers according to configured 7 OFDM symbols (i.e., 0.5 TTI), and determines a RB (represented as a block with a thin solid line) according to the configured 7 OFDM symbols and 24 subcarriers. In one example, the second communication device determines 36 subcarriers according to configured 3 OFDM symbols, and determines a RB (represented as a block with a dotted line) according to the configured 3 OFDM symbols and 36 subcarriers.

In one example, the first communication device configures the number of at least one RB (e.g., 1, 2, 3,..., RB(s)) as a search unit to the second communication device. In one example, more than one the RB are continuous or discontinuous, if the more than one the RB are configured as the search unit.

In one example, when performing a reception of the RB, the second communication device searches a possible frequency location of the TB (with a scrambled CRC, or with a CB and a scrambled CRC) in the search unit in a frequency domain. The second communication device searches possible frequency locations of the TB in a logical domain by performing the following steps: receiving a time/frequency resource on the more than one RBs within a configured TTI and rearranging the time/frequency resource (e.g., by deinterleaving the time/frequency resource). Then, the second communication device searches the TB addressed to it by performing multiple decodings in the logical domain by using a predefined frequency unit until a successful decoding occurs, i.e., the CRC check is successful, or a predefined number of decoding is achieved. In one example, the predefined frequency unit is a unit of at least one subcarrier, at least one resource element (RE), or at least one RB, and is not limited herein. In one example, the first communication device performs an operation of interleaving on a unit of at least one subcarrier, at least one RE, or at least one RB, and is not limited herein. Accordingly, the second communication device may need to perform an operation of deinterleaving. In one example, the first communication device does not perform the operation of interleaving. Accordingly, the second communication device may not need to perform the operation of deinterleaving. In one example, the operations of interleaving and the deinterleaving are known by the first communication device and the second communication device.

There are several examples of locations of the TB and the first scrambled CRC according to the process 30. In one example, the TB is placed before the first scrambled CRC. In one example, the first scrambled CRC is placed before the TB.

There are several examples of locations of the TB, the first CB and the first scrambled CRC according to the process 60. In one example, the TB is placed before the first CB and the first scrambled CRC. In one example, the first CB is placed before the TB and the first scrambled CRC. In one example, the first CB is placed before the first scrambled CRC and the TB. In one example, the first scrambled CRC is placed before the first CB and the TB.

In one example, the embodiments described above may be applied to filtered bank multicarrier (FBMC) or universal filtered multicarrier (UFMC). In one example, the at least one subcarrier in the at least one consecutive OFDM symbol may be replaced by a subband used in the UFMC. That is, a bandwidth of the at least one subcarrier is same as a bandwidth of the subband.

In one example, the first CB indicates that the OFDM, the UFMC or the FBMC are used for the transmission of the TB. In one example, the first CB indicates a filter length of the UFMC.

In the abovementioned embodiments, the first (or second, third) CRC, and the first (or second, third) scrambled CRC generated from the first CRC (or second, third) have a fixed length (e.g., 16, 24 or 32 bits), which is known by the first communication device and second communication device. In one example, the first CRC is calculated according to both the first CB and the TB.

In the abovementioned embodiments, a padding scheme is applied to the first (or second) identifier for aligning a bit length of the first (or second) identifier and a bit length of the first (or second) CRC, when the bit length of the first (or second) used for scrambling the first (or second) CRC is shorter than the bit length of the first (or second) CRC. In one example, the padding scheme (e.g., a pattern and position) is known by the first communication device and second communication device.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. Any of the abovementioned processes may be compiled into the program code 214. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means be the communication device 20.

To sum up, the present invention provides a method and related communication device for handling communication with another communication device. Thus, the problem of handling the communication with the network is solved.

## Claims

1. A first communication device of handling communication with a second communication device in a 3GPP system, comprising:
a storage unit (210), for storing instructions; and
a processing circuit (200), coupled to the storage unit (210), wherein the storage unit (210) stores, and the processing circuit (200) is configured to execute, the instructions of:
transmitting a radio resource control, RRC, message or a random access response, RAR, to the second communication device, wherein the RRC message configures a first identifier, or the RAR configures the first identifier, to be a cell radio network temporary identifier, C-RNTI;
generating a transport block, TB;
generating a first cyclic redundancy check, CRC, according to the TB;
scrambling the first CRC with the first identifier to generate a first scrambled CRC, wherein the first identifier is known by the first communication device and second communication device; and
performing a transmission of the TB and the first scrambled CRC on at least one first subcarrier in at least one first consecutive orthogonal frequency division multiplexing, OFDM, symbol, to the second communication device.

2. The first communication device of claim 1, wherein the first scrambled CRC is descrambled with the first identifier to the first CRC by the second communication device, to determine whether the TB belongs to the second communication device.

3. The first communication device of claim 1, wherein the storage unit (210) further stores, and the processing circuit (200) is further configured to execute an instruction of:
performing a retransmission of the TB with a second scrambled CRC on at least one second subcarrier in at least one second consecutive OFDM symbol, to the second communication device, if the first communication device does not receive a hybrid automatic repeat request, HARQ, acknowledgement, ACK, of the transmission of the TB or receives a HARQ negative acknowledgement, NACK, of the transmission of the TB on at least one third subcarrier in at least one third consecutive OFDM symbol, from the second communication device.

4. The first communication device of claim 3, wherein the first scrambled CRC and the second scrambled CRC are the same, if the transmission of the TB and the retransmission of the TB are the same; and the first scrambled CRC and the second scrambled CRC are different, if the transmission of the TB and the retransmission of the TB are different.

5. The first communication device of claim 3, wherein the number of the at least one first consecutive OFDM symbol, the number of the at least one second consecutive OFDM symbol and the number of the at least one third consecutive OFDM symbol are the same or different.

6. The first communication device of claim 1, wherein the storage unit (210) further stores, and the processing circuit (200) is further configured to execute an instruction of:
transmitting a configuration configuring the number of the at least one first consecutive OFDM symbol in a radio resource control, RRC, message, a medium access control, MAC, Protocol Data Unit, PDU, or a physical layer signaling to the second communication device, before performing the transmission.

7. A method for handling communication between a first communication device and a second communication device in a 3GPP system, comprising:
transmitting, by the first communication device, a radio resource control, RRC, message or a random access response, RAR, to the second communication device, wherein the RRC message configures a first identifier, or the RAR configures the first identifier, to be a cell radio network temporary identifier, C-RNTI;
generating, by the first communication device, a transport block, TB;
generating, by the first communication device, a first cyclic redundancy check, CRC, according to the TB;
scrambling, by the first communication device, the first CRC with the first identifier to generate, by the first communication device, a first scrambled CRC, wherein the first identifier is known by the first communication device and second communication device; and
performing, by the first communication device, a transmission of the TB and the first scrambled CRC on at least one first subcarrier in at least one first consecutive orthogonal frequency division multiplexing, OFDM, symbol, to the second communication device.

8. The method of claim 1, wherein the first scrambled CRC is descrambled with the first identifier to the first CRC by the second communication device, to determine whether the TB belongs to the second communication device.

9. The method of claim 1 further comprises an instruction of:
performing, by the first communication device, a retransmission of the TB with a second scrambled CRC on at least one second subcarrier in at least one second consecutive OFDM symbol, to the second communication device, if the first communication device does not receive a hybrid automatic repeat request, HARQ, acknowledgement, ACK, of the transmission of the TB or receives a HARQ negative acknowledgement, NACK, of the transmission of the TB on at least one third subcarrier in at least one third consecutive OFDM symbol, from the second communication device.

10. The method of claim 9, wherein the first scrambled CRC and the second scrambled CRC are the same, if the transmission of the TB and the retransmission of the TB are the same; and the first scrambled CRC and the second scrambled CRC are different, if the transmission of the TB and the retransmission of the TB are different.

11. The method of claim 9, wherein the number of the at least one first consecutive OFDM symbol, the number of the at least one second consecutive OFDM symbol and the number of the at least one third consecutive OFDM symbol are the same or different.

12. The method of claim 7, wherein further comprises an instruction of:
Transmitting, by the first communication device, a configuration configuring the number of the at least one first consecutive OFDM symbol in a radio resource control, RRC, message, a medium access control, MAC, Protocol Data Unit, PDU, or a physical layer signaling to the second communication device, before performing the transmission.

## Patentansprüche

1. Eine erste Kommunikationsvorrichtung zur Handhabung der Kommunikation mit einer zweiten Kommunikationsvorrichtung in einem 3GPP-System, beinhaltend:
eine Speichereinheit (210) zum Speichern von Anweisungen; und
eine Verarbeitungsschaltung (200), die mit der Speichereinheit (210) gekoppelt ist,
wobei die Speichereinheit (210) die folgenden Anweisungen speichert und die Verarbeitungsschaltung (200) konfiguriert ist, um die folgenden Anweisungen auszuführen:
Übertragen einer Funkressourcensteuerung(RRC)-Nachricht oder einer Direktzugriffsantwort (RAR) an die zweite Kommunikationsvorrichtung, wobei die RRC-Nachricht eine erste Kennung konfiguriert oder die RAR die erste Kennung konfiguriert, um eine temporäre Zellenfunknetzkennung (C-RNTI) zu sein;
Erzeugen eines Transportblocks (TB);
Erzeugen einer ersten zyklischen Redundanzprüfung (CRC) gemäß dem TB;
Verschlüsseln der ersten CRC mit der ersten Kennung, um eine erste verschlüsselte CRC zu erzeugen, wobei die erste Kennung der ersten Kommunikationsvorrichtung und der zweiten Kommunikationsvorrichtung bekannt ist; und
Durchführen einer Übertragung des TB und der ersten verschlüsselten CRC auf mindestens einem ersten Unterträger in mindestens einem ersten aufeinanderfolgenden Symbol orthogonalen Frequenzmultiplexverfahrens (OFDM, Orthogonal Frequency Division Multiplexing) an die zweite Kommunikationsvorrichtung.

2. Erste Kommunikationsvorrichtung gemäß Anspruch 1, wobei die erste verschlüsselte CRC mit der ersten Kennung in der ersten CRC von der zweiten Kommunikationsvorrichtung entschlüsselt wird, um zu bestimmen, ob die TB zu der zweiten Kommunikationsvorrichtung gehört.

3. Erste Kommunikationsvorrichtung gemäß Anspruch 1, wobei die Speichereinheit (210) ferner die folgenden Anweisungen speichert und die Verarbeitungsschaltung (200) ferner konfiguriert ist, um die folgende Anweisung auszuführen:
Durchführen einer erneuten Übertragung des TB mit einer zweiten verschlüsselten CRC auf mindestens einem zweiten Unterträger in mindestens einem zweiten aufeinanderfolgenden OFDM-Symbol an die zweite Kommunikationsvorrichtung, wenn die erste Kommunikationsvorrichtung keine Bestätigung (ACK) für eine hybride automatische Wiederholungsanforderung (HARQ) der Übertragung des TB empfängt oder eine negative Bestätigung (NACK) für eine HARQ der Übertragung des TB auf mindestens einem dritten Unterträger in mindestens einem dritten aufeinanderfolgenden OFDM-Symbol von der zweiten Kommunikationsvorrichtung empfängt.

4. Erste Kommunikationsvorrichtung gemäß Anspruch 3, wobei die erste verschlüsselte CRC und die zweite verschlüsselte CRC gleich sind, wenn die Übertragung des TB und die erneute Übertragung des TB gleich sind; und die erste verschlüsselte CRC und die zweite verschlüsselte CRC unterschiedlich sind, wenn die Übertragung des TB und die erneute Übertragung des TB unterschiedlich sind.

5. Erste Kommunikationsvorrichtung gemäß Anspruch 3, wobei die Anzahl des mindestens einen ersten aufeinanderfolgenden OFDM-Symbols, die Anzahl des mindestens einen zweiten aufeinanderfolgenden OFDM-Symbols und die Anzahl des mindestens einen dritten aufeinanderfolgenden OFDM-Symbols gleich oder unterschiedlich sind.

6. Erste Kommunikationsvorrichtung gemäß Anspruch 1, wobei die Speichereinheit (210) ferner die folgenden Anweisungen speichert und die Verarbeitungsschaltung (200) ferner konfiguriert ist, um die folgende Anweisung auszuführen:
Übertragen einer Konfiguration, die die Anzahl des mindestens einen ersten aufeinanderfolgenden OFDM-Symbols in einer Funkressourcensteuerung(RRC)-Nachricht, einer Medienzugriffskontroll(MAC)-Protokolldateneinheit (PDU) oder einer Signalisierung der physikalischen Schicht (Physical-Layer-Signaling) an die zweite Kommunikationsvorrichtung vor dem Durchführen der Übertragung konfiguriert.

7. Ein Verfahren zur Handhabung der Kommunikation zwischen einer ersten Kommunikationsvorrichtung und einer zweiten Kommunikationsvorrichtung in einem 3GPP-System, beinhaltend:
Übertragen, durch die erste Kommunikationsvorrichtung, einer Funkressourcensteuerung(RRC)-Nachricht oder einer Direktzugriffsantwort (RAR) an die zweite Kommunikationsvorrichtung, wobei die RRC-Nachricht eine erste Kennung konfiguriert oder die RAR die erste Kennung konfiguriert, um eine temporäre Zellenfunknetzkennung (C-RNTI) zu sein;
Erzeugen, durch die erste Kommunikationsvorrichtung, eines Transportblocks (TB);
Erzeugen, durch die erste Kommunikationsvorrichtung, einer ersten zyklischen Redundanzprüfung (CRC) gemäß dem TB;
Verschlüsseln, durch die erste Kommunikationsvorrichtung, der ersten CRC mit der ersten Kennung, um, durch die erste Kommunikationsvorrichtung, eine erste verschlüsselte CRC zu erzeugen, wobei die erste Kennung der ersten Kommunikationsvorrichtung und der zweiten Kommunikationsvorrichtung bekannt ist; und
Durchführen, durch die erste Kommunikationsvorrichtung, einer Übertragung des TB und des ersten verschlüsselten CRC auf mindestens einem ersten Unterträger in mindestens einem ersten aufeinanderfolgenden Symbol orthogonalen Frequenzmultiplexverfahrens (OFDM, Orthogonal Frequency Division Multiplexing) an die zweite Kommunikationsvorrichtung.

8. Verfahren gemäß Anspruch 1, wobei die erste verschlüsselte CRC mit der ersten Kennung von der zweiten Kommunikationsvorrichtung zu der ersten CRC entschlüsselt wird, um zu bestimmen, ob der TB zu der zweiten Kommunikationsvorrichtung gehört.

9. Verfahren gemäß Anspruch 1, das ferner eine folgende Anweisung beinhaltet:
Durchführen, durch die Kommunikationsvorrichtung, einer erneuten Übertragung des TB mit einer zweiten verschlüsselten CRC auf mindestens einem zweiten Unterträger in mindestens einem zweiten aufeinanderfolgenden OFDM-Symbol an die zweite Kommunikationsvorrichtung, wenn die erste Kommunikationsvorrichtung keine Bestätigung (ACK) für eine hybride automatische Wiederholungsanforderung (HARQ) der Übertragung des TB empfängt oder eine negative Bestätigung (NACK) für eine HARQ der Übertragung des TB auf mindestens einem dritten Unterträger in mindestens einem dritten aufeinanderfolgenden OFDM-Symbol von der zweiten Kommunikationsvorrichtung empfängt.

10. Verfahren gemäß Anspruch 9, wobei die erste verschlüsselte CRC und die zweite verschlüsselte CRC gleich sind, wenn die Übertragung des TB und die erneute Übertragung des TB gleich sind; und die erste verschlüsselte CRC und die zweite verschlüsselte CRC unterschiedlich sind, wenn die Übertragung des TB und die erneute Übertragung des TB unterschiedlich sind.

11. Verfahren gemäß Anspruch 9, wobei die Anzahl des mindestens einen ersten aufeinanderfolgenden OFDM-Symbols, die Anzahl des mindestens einen zweiten aufeinanderfolgenden OFDM-Symbols und die Anzahl des mindestens einen dritten aufeinanderfolgenden OFDM-Symbols gleich oder unterschiedlich sind.

12. Verfahren gemäß Anspruch 7, das ferner eine folgende Anweisung beinhaltet:
Übertragen, durch die erste Kommunikationsvorrichtung, einer Konfiguration, die die Anzahl des mindestens einen ersten aufeinanderfolgenden OFDM-Symbols in einer Funkressourcensteuerung(RRC)-Nachricht, einer Medienzugriffssteuerung(MAC)-Protokolldateneinheit (PDU) oder einer Signalisierung der physikalischen Schicht (Physical-Layer-Signaling) an die zweite Kommunikationsvorrichtung vor dem Durchführen der Übertragung konfiguriert.

## Revendications

1. Un premier dispositif de communication de gestion de communication avec un deuxième dispositif de communication dans un système 3GPP, comprenant :
une unité de stockage (210), pour le stockage d'instructions ; et
un circuit de traitement (200), couplé à l'unité de stockage (210), où l'unité de stockage (210) stocke, et le circuit de traitement (200) est configuré pour exécuter, les instructions :
de transmission d'un message RRC (Radio Resource Control, commande de ressources radio) ou d'une RAR (Random Access Response, réponse d'accès aléatoire) au deuxième dispositif de communication, le message RRC configurant un premier identifiant, ou la RAR configurant le premier identifiant, afin d'être un C-RNTI (Cell Radio Network Temporary Identifier, identifiant temporaire de réseau radio de cellule) ;
de génération d'un TB (Transport Block, bloc de transport) ;
de génération d'un premier CRC (Cyclic Redundancy Check, contrôle de redondance cyclique) selon le TB ;
d'embrouillage du premier CRC avec le premier identifiant afin de générer un premier CRC embrouillé, le premier identifiant étant connu du premier dispositif de communication et du deuxième dispositif de communication ; et
de réalisation d'une transmission du TB et du premier CRC embrouillé sur au moins une première sous-porteuse dans au moins un premier symbole OFDM (Orthogonal Frequency Division Multiplexing, multiplexage par répartition orthogonale de la fréquence) consécutif, au deuxième dispositif de communication.

2. Le premier dispositif de communication de la revendication 1, où le premier CRC embrouillé est désembrouillé avec le premier identifiant en ce premier CRC par le deuxième dispositif de communication, afin de déterminer si le TB appartient au deuxième dispositif de communication.

3. Le premier dispositif de communication de la revendication 1, où l'unité de stockage (210) stocke en sus, et le circuit de traitement (200) est en sus configuré pour exécuter une instruction :
de réalisation d'une retransmission du TB avec un deuxième CRC embrouillé sur au moins une deuxième sous-porteuse dans au moins un deuxième symbole OFDM consécutif, au deuxième dispositif de communication, si le premier dispositif de communication ne reçoit pas d'ACK (ACKnowledgement, accusé de réception) HARQ (Hybrid Automatic Repeat reQuest, demande de répétition automatique hybride) de la transmission du TB ou reçoit un NACK (Negative ACKnowledgement, accusé de réception négatif) HARQ de la transmission du TB sur au moins une troisième sous-porteuse dans au moins un troisième symbole OFDM consécutif, du deuxième dispositif de communication.

4. Le premier dispositif de communication de la revendication 3, où le premier CRC embrouillé et le deuxième CRC embrouillé sont les mêmes, si la transmission du TB et la retransmission du TB sont les mêmes ; et le premier CRC embrouillé et le deuxième CRC embrouillé sont différents, si la transmission du TB et la retransmission du TB sont différentes.

5. Le premier dispositif de communication de la revendication 3, où le nombre de l'au moins un premier symbole OFDM consécutif, le nombre de l'au moins un deuxième symbole OFDM consécutif et le nombre de l'au moins un troisième symbole OFDM consécutif sont les mêmes ou différents.

6. Le premier dispositif de communication de la revendication 1, où l'unité de stockage (210) stocke en sus, et le circuit de traitement (200) est en sus configuré pour exécuter une instruction :
de transmission d'une configuration configurant le nombre de l'au moins un premier symbole OFDM consécutif dans un message RRC (Radio Resource Control), une PDU (Protocol Data Unit, unité de données de protocole) MAC (Médium Access Control, commande d'accès au support), ou une signalisation de couche physique au deuxième dispositif de communication, avant de réaliser la transmission.

7. Une méthode pour la gestion de communication entre un premier dispositif de communication et un deuxième dispositif de communication dans un système 3GPP, comprenant :
la transmission, par le premier dispositif de communication, d'un message RRC (Radio Resource Control) ou d'une RAR (Random Access Response) au deuxième dispositif de communication, le message RRC configurant un premier identifiant, ou la RAR configurant le premier identifiant, afin d'être un C-RNTI (Cell Radio Network Temporary Identifier) ;
la génération, par le premier dispositif de communication, d'un TB (Transport Block) ;
la génération, par le premier dispositif de communication, d'un premier CRC (Cyclic Redundancy Check) selon le TB ;
l'embrouillage, par le premier dispositif de communication, du premier CRC avec le premier identifiant afin de générer, par le premier dispositif de communication, un premier CRC embrouillé, le premier identifiant étant connu du premier dispositif de communication et du deuxième dispositif de communication ; et
la réalisation, par le premier dispositif de communication, d'une transmission du TB et du premier CRC embrouillé sur au moins une première sous-porteuse dans au moins un premier symbole OFDM (Orthogonal Frequency Division Multiplexing) consécutif, au deuxième dispositif de communication.

8. La méthode de la revendication 1, où le premier CRC embrouillé est désembrouillé avec le premier identifiant en ce premier CRC par le deuxième dispositif de communication, afin de déterminer si le TB appartient au deuxième dispositif de communication.

9. La méthode de la revendication 1 comprenant en sus une instruction :
de réalisation, par le premier dispositif de communication, d'une retransmission du TB avec un deuxième CRC embrouillé sur au moins une deuxième sous-porteuse dans au moins un deuxième symbole OFDM consécutif, au deuxième dispositif de communication, si le premier dispositif de communication ne reçoit pas d'ACK (ACKnowledgement) HARQ (Hybrid Automatic Repeat Request) de la transmission du TB ou reçoit un NACK (Negative ACKnowledgement) HARQ de la transmission du TB sur au moins une troisième sous-porteuse dans au moins un troisième symbole OFDM consécutif, du deuxième dispositif de communication.

10. Le méthode de la revendication 9, où le premier CRC embrouillé et le deuxième CRC embrouillé sont les mêmes, si la transmission du TB et la retransmission du TB sont les mêmes ; et le premier CRC embrouillé et le deuxième CRC embrouillé sont différents, si la transmission du TB et la retransmission du TB sont différentes.

11. La méthode de la revendication 9, où le nombre de l'au moins un premier symbole OFDM consécutif, le nombre de l'au moins un deuxième symbole OFDM consécutif et le nombre de l'au moins un troisième symbole OFDM consécutif sont les mêmes ou différents.

12. La méthode de la revendication 7, comprenant en sus une instruction :
de transmission, par le premier dispositif de communication, d'une configuration configurant le nombre de l'au moins un premier symbole OFDM consécutif dans un message RRC (Radio Resource Control), une PDU (Protocol Data Unit) MAC (Médium Access Control), ou une signalisation de couche physique au deuxième dispositif de communication, avant de réaliser la transmission.
